# FASCICULE DE BREVET EUROPEEN

(11) **EP 3 048 006 B1**
(45) Date de publication et mention de la délivrance du brevet: **18.03.2020**
(21) Numéro de dépôt: 16151952.5
(22) Date de dépôt: 19.01.2016
(51) Int. Cl.: B60N 2/80, B60N 2/809, B60N 2/888, B60N 2/818, B60N 2/427

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 20.01.2015 FR 1550454
(43) Date de publication de la demande: 27.07.2016
(73) Titulaire: Cera TSC, 75008 Paris (FR)
(72) Inventeur: DAUCHEZ, Fernand, 02400 Bezu Saint Germain (FR); GANIER, David, 02190 Guignicourt (FR); ZEDIAR, Ahmed, 51100 Reims (FR); HORNY, Frédéric, 51100 Reims (FR)
(74) Mandataire: Sayettat, Julien Christian

(56) Documents cités:
- EP-A1- 2 017 121
- FR-A1- 2 907 390

## Description

L'invention concerne un appui-tête de véhicule automobile, une armature d'un tel appui-tête et un procédé de réalisation d'une telle armature.

Il est connu, du document EP 2017121 A1 et aussi du document FR-2 907 390, de réaliser un appui-tête de siège de véhicule automobile, ledit appui-tête comprenant un coussin d'appui de la tête du passager et une armature de liaison dudit coussin à un dossier dudit siège, ladite armature étant à base de tube métallique replié de manière à présenter une forme générale de U retourné définissant :
- une partie médiane logée dans ledit coussin,
- deux branches parallèles destinées à être reçues en coulissement dans le dossier dudit siège, lesdites branches présentant, sur au moins une partie de leur longueur, une section radiale externe oblongue dont la grande dimension s'étend longitudinalement, de manière à renforcer leur résistance en flexion face à un effort appliqué longitudinalement,
- deux parties coudées respectives de liaison desdites branches à ladite partie médiane,
lesdites parties coudées et lesdites branches présentant une épaisseur de paroi sensiblement constante.

Le renforcement des branches ainsi obtenu permet de réaliser l'armature, à iso-performance en résistance à la flexion, à partir d'un tube allégé - par minimisation du diamètre du tube de départ et/ou de l'épaisseur de sa paroi, ce qui permet de diminuer les coûts de fabrication et de contribuer à l'allègement du véhicule. Selon une réalisation du document FR-2 907 390, il est prévu de réaliser l'armature à partir d'un tube de section radiale externe oblongue qui est replié de manière à présenter une forme générale de U retourné.

Cependant, le pliage d'un tube de section radiale externe oblongue est complexe à réaliser et peut donner lieu à l'apparition d'arêtes de pliage vives qui ne répondent pas aux normes de sécurité d'un habitacle de véhicule automobile. L'invention a pour but de pallier ces inconvénients.

A cet effet, et selon un premier aspect, l'invention propose un appui-tête de siège de véhicule automobile, ledit appui-tête comprenant un coussin d'appui de la tête du passager et une armature de liaison dudit coussin à un dossier dudit siège, ladite armature étant à base de tube métallique replié de manière à présenter une forme générale de U retourné définissant :
- une partie médiane logée dans ledit coussin,
- deux branches parallèles destinées à être reçues en coulissement dans le dossier dudit siège, lesdites branches présentant, sur au moins une partie de leur longueur, une section radiale externe oblongue dont la grande dimension s'étend longitudinalement, de manière à renforcer leur résistance en flexion face à un effort appliqué longitudinalement,
- deux parties coudées respectives de liaison desdites branches à ladite partie médiane,
lesdites parties coudées et lesdites branches présentant une épaisseur de paroi sensiblement constante, ladite partie médiane et lesdites parties coudées présentant une section radiale externe sensiblement circulaire.

Dans cette description, les termes de positionnement dans l'espace (bas, inférieur, longitudinal, latéral, avant, ...) sont pris en référence à l'appui-tête disposé en configuration d'utilisation dans le véhicule.

Le terme « radial » est quant à lui considéré relativement à l'axe médian selon lequel s'étend la tige, ledit axe suivant les pliages conférés à ladite tige.

On notera que la caractéristique d'épaisseur de paroi sensiblement constante n'exclut pas des variations d'épaisseur localisées, par exemple dans les zones recourbées ou crantées, ou encore en extrémités de branches lorsqu'elles sont amenuisées, ceci du fait de la possibilité d'un fluage localisé du métal dans de telles zones.

Avec l'agencement proposé, on réalise le pliage d'un tube de section radiale externe circulaire, ce qui est aisé à réaliser et ne conduit pas à l'apparition d'arêtes de pliage vives.

En outre, l'armature présente une bonne résistance en flexion, face à un effort appliqué longitudinalement, conférée par le fait que les branches présentant, sur au moins une partie de leur longueur, une section radiale externe oblongue dont la grande dimension s'étend longitudinalement.

Selon d'autres aspects, l'invention propose une armature pour un tel appui-tête et un procédé de réalisation d'une telle armature.

D'autres particularités et avantages de l'invention apparaîtront dans la description qui suit, faite en référence aux figures jointes, dans lesquelles :
- la figure 1 est une représentation schématique en perspective d'un appui-tête pourvu d'une armature selon une première réalisation,
- la figure 2 est une représentation schématique en perspective d'un appui-tête pourvu d'une armature selon une deuxième réalisation,
- la figure 3 est une représentation schématique en perspective d'un appui-tête pourvu d'une armature selon une troisième réalisation,
- la figure 4 est une représentation schématique en coupe radiale d'une branche d'armature selon un mode de réalisation.

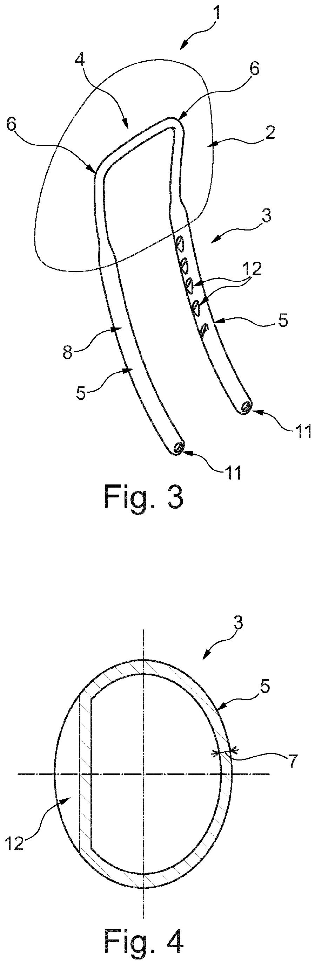

En référence aux figures, on décrit un appui-tête 1 de siège de véhicule automobile, ledit appui-tête comprenant un coussin 2 d'appui de la tête du passager et une armature 3 de liaison dudit coussin à un dossier dudit siège, ladite armature étant à base de tube métallique replié de manière à présenter une forme générale de U retourné définissant :
- une partie médiane 4 logée dans ledit coussin,
- deux branches 5 parallèles destinées à être reçues en coulissement dans le dossier dudit siège, lesdites branches présentant, sur au moins une partie de leur longueur, comme représenté en figure 4, une section radiale externe oblongue dont la grande dimension s'étend longitudinalement, de manière à renforcer leur résistance en flexion face à un effort appliqué longitudinalement,
- deux parties coudées 6 respectives de liaison desdites branches à ladite partie médiane,
lesdites parties coudées et lesdites branches présentant une épaisseur de paroi 7 sensiblement constante, ladite partie médiane et lesdites parties coudées présentant une section radiale externe sensiblement circulaire.

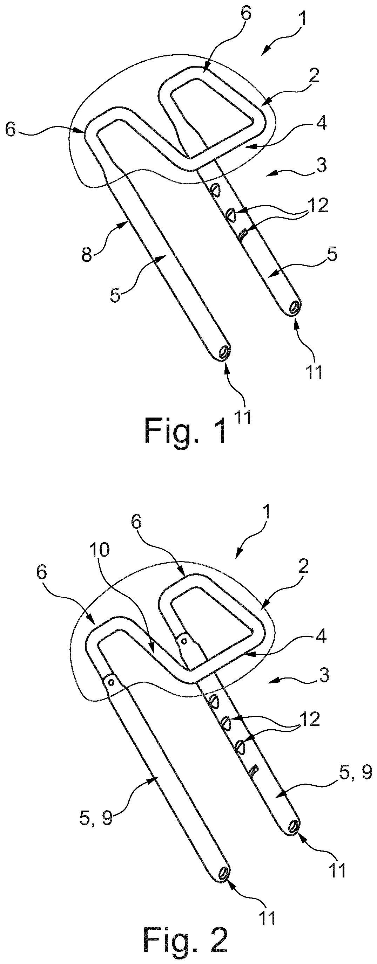

Selon les réalisations représentées en figures 1 et 3, l'armature 3 est à base d'un tube unique 8 replié de manière à définir les parties médiane 4 et coudées 6 et les branches 5.

Selon la réalisation représentée en figure 2, l'armature 3 est à base de deux tubes latéraux 9 définissant les branches 5, lesdites branches étant reliées entre elles - notamment par emboitement - par un tube intermédiaire 10 replié de manière à définir les parties médiane 4 et coudées 6.

Une telle réalisation s'avère pertinente notamment lorsque les branches 5 présentent un revêtement de surface - par exemple à base de chrome - qui n'est pas requis en partie médiane 4 qui est cachée par le coussin 2 de l'appui-tête 1.

Selon les réalisations représentées, la section radiale externe oblongue est en forme d'ovale.

Selon les réalisations représentées, les branches 5 présentent une section radiale externe oblongue s'étendant jusqu'à leur extrémité inférieure 11.

Selon les réalisations représentées, l'extrémité inférieure 11 des branches 5 est profilée en ogive de manière à présenter une section radiale externe s'amenuisant vers le bas.

On facilite ainsi le montage de l'appui-tête 1 sur le dossier et on évite tout risque de coupure du fait de l'absence d'arête vive en extrémité 11 de branche 5.

Selon les réalisations représentées, au moins une branche 5 - et en particulier une seule - est pourvue d'au moins un cran 12 - ici plusieurs - destiné à recevoir une pièce de blocage montée mobile - notamment par translation radiale - sur le dossier du siège.

La présence d'au moins un tel cran 12 permet un réglage en hauteur et/ou une anti-extraction de l'appui-tête 1 du dossier de siège.

Selon la réalisation de la figure 3, les branches 5 présentent en vue latérale une courbure s'inscrivant dans un cercle de rayon minimal de 800 mm.

On notera que, du fait de son rayon important, une telle courbure est aisée à réaliser dans une partie de section radiale oblongue sans conduire à l'apparition d'arêtes de pliage vives.

Selon les réalisations des figures 1 et 2, l'armature 3 présente en vue latérale une forme générale de J renversé, les parties coudées 6 étant repliées de sensiblement un demi-tour vers l'avant.

On décrit à présent une armature 3 pour un tel appui-tête 1, ladite armature étant à base de tube métallique replié de manière à présenter une forme générale de U retourné définissant :
- une partie médiane 4,
- deux branches 5 parallèles présentant, sur au moins une partie de leur longueur, une section radiale externe oblongue dont la grande dimension s'étend longitudinalement, de manière à renforcer leur résistance en flexion face à un effort appliqué longitudinalement,
- deux parties coudées 6 respectives de liaison desdites branches à ladite partie médiane,
lesdites parties coudées et lesdites branches présentant une épaisseur de paroi 7 sensiblement constante, ladite partie médiane et lesdites parties coudées présentant une section radiale externe sensiblement circulaire.

On décrit enfin un procédé de réalisation d'une telle armature 3, ledit procédé comprenant les étapes suivantes :
- prévoir un conduit tubulaire rectiligne présentant une section radiale externe circulaire, ledit conduit étant à base d'un tube unique 8 (figures 1 et 3) replié, d'épaisseur de paroi 7 constante, ou de deux tubes latéraux 9 reliés entre eux - notamment par emboitement - par un tube intermédiaire 10 (figure 2), chacun desdits tubes présentant une épaisseur de paroi 7 constante,
- replier ledit conduit, soit dans ledit tube unique soit dans ledit tube intermédiaire, de manière à lui conférer une forme générale de U retourné définissant une partie médiane 4, deux branches 5 parallèles et deux parties coudées 6 respectives de liaison desdites branches à ladite partie médiane, la section radiale externe dudit conduit restant sensiblement circulaire,
- le cas échéant, réaliser un emboutissage préliminaire dans une matrice et un poinçon conformés de sorte que l'extrémité inférieure 11 desdites branches soit profilée en ogive de manière à présenter une section radiale externe s'amenuisant vers le bas,
- emboutir lesdites branches entre une matrice et un poinçon de manière à conférer auxdites branches, sur au moins une partie de leur longueur, une section radiale externe oblongue,
- le cas échéant, avant ou après emboutissage desdites branches, réaliser au moins un cran 12 sur au moins une desdites branches.

On notera ici qu'un conduit tubulaire rectiligne d'épaisseur de paroi 7 constante est un composant standard très aisé à réaliser, ce qui permet d'obtenir une armature 3 à coût minimisé.

On observe en outre que, partant d'un conduit tubulaire d'épaisseur de paroi 7 constante, non seulement les parties coudées 6 et les branches 5 présentent une épaisseur de paroi 7 sensiblement constante, mais aussi la partie médiane 4.

Comme explicité précédemment, les opérations de profilage des branches 5, de réalisation de cran 12 ou de repliement du conduit peuvent conduire à des variations localisées d'épaisseur de paroi 7, ladite épaisseur restant toutefois sensiblement constante.

Comme précisé ci-dessus, il peut être prévu, avant l'emboutissage des branches 5 sus-décrit, de réaliser un emboutissage préliminaire dans une matrice et un poinçon conformés de sorte que l'extrémité inférieure 11 des branches soit profilée en ogive de manière à présenter une section radiale externe s'amenuisant vers le bas.

La demanderesse a observé en effet qu'il est beaucoup plus aisé de réaliser d'abord le profilage des extrémités 11 de branches 5, puis l'emboutissage desdites branches pour leur conférer une section radiale externe oblongue, que de procéder à l'inverse.

Comme précisé ci-dessus, si l'on souhaite disposer d'au moins un cran 12 sur une branche 5, on peut réaliser ledit cran sur ladite branche avant ou après l'emboutissage lui conférant une section radiale externe oblongue.

De même, pour obtenir des branches 5 présentant en vue latérale une courbure s'inscrivant dans un cercle de rayon minimal de 800 mm, il est préférable de réaliser ladite courbure avant l'emboutissage leur conférant une section radiale externe oblongue.

## Revendications

1. Appui-tête (1) de siège de véhicule automobile, ledit appui-tête comprenant un coussin (2) d'appui de la tête du passager et une armature (3) de liaison dudit coussin à un dossier dudit siège, ladite armature étant à base de tube métallique replié de manière à présenter une forme générale de U retourné définissant :
• une partie médiane (4) logée dans ledit coussin,
• deux branches (5) parallèles destinées à être reçues en coulissement dans le dossier dudit siège, lesdites branches présentant, sur au moins une partie de leur longueur, une section radiale externe oblongue dont la grande dimension s'étend longitudinalement, de manière à renforcer leur résistance en flexion face à un effort appliqué longitudinalement,
• deux parties coudées (6) respectives de liaison desdites branches à ladite partie médiane,
lesdites parties coudées et lesdites branches présentant une épaisseur de paroi (7) sensiblement constante, ledit appui-tête étant **caractérisé en ce que** ladite partie médiane et lesdites parties coudées présentent une section radiale externe sensiblement circulaire.

2. Appui-tête selon la revendication 1, **caractérisé en ce que** l'armature (3) est à base d'un tube unique (8) replié de manière à définir les parties médiane (4) et coudées (6) et les branches (5).

3. Appui-tête selon la revendication 1, **caractérisé en ce que** l'armature (3) est à base de deux tubes latéraux (9) définissant les branches (5), lesdites branches étant reliées entre elles par un tube intermédiaire (10) replié de manière à définir les parties médiane (4) et coudées (6).

4. Appui-tête selon l'une quelconque des revendications 1 à 3, **caractérisé en ce que** les branches (5) présentent une section radiale externe oblongue s'étendant jusqu'à leur extrémité inférieure (11).

5. Appui-tête selon l'une quelconque des revendications 1 à 4, **caractérisé en ce que** l'extrémité inférieure (11) des branches (5) est profilée en ogive de manière à présenter une section radiale externe s'amenuisant vers le bas.

6. Appui-tête selon l'une quelconque des revendications 1 à 5, **caractérisé en ce qu'**au moins une branche (5) est pourvue d'au moins un cran (12) destiné à recevoir une pièce de blocage montée mobile sur le dossier du siège.

7. Appui-tête selon l'une quelconque des revendications 1 à 6, **caractérisé en ce que** les branches (5) présentent en vue latérale une courbure s'inscrivant dans un cercle de rayon minimal de 800 mm.

8. Appui-tête selon l'une quelconque des revendications 1 à 7, **caractérisé en ce que** l'armature (3) présente en vue latérale une forme générale de J renversé, les parties coudées (6) étant repliées de sensiblement un demi-tour vers l'avant.

9. Armature (3) pour un appui-tête (1) selon l'une quelconque des revendications 1 à 8, ladite armature étant à base de tube métallique replié de manière à présenter une forme générale de U retourné définissant :
• une partie médiane (4),
• deux branches (5) parallèles présentant, sur au moins une partie de leur longueur, une section radiale externe oblongue dont la grande dimension s'étend longitudinalement, de manière à renforcer leur résistance en flexion face à un effort appliqué longitudinalement,
• deux parties coudées (6) respectives de liaison desdites branches à ladite partie médiane,
lesdites parties coudées et lesdites branches présentant une épaisseur de paroi (7) sensiblement constante, ladite armature étant **caractérisée en ce que** ladite partie médiane et lesdites parties coudées présentent une section radiale externe sensiblement circulaire.

10. Procédé de réalisation d'une armature (3), ledit procédé comprenant les étapes suivantes :
• prévoir un conduit tubulaire rectiligne présentant une section radiale externe circulaire, ledit conduit étant à base d'un tube unique (8) replié, d'épaisseur de paroi (7) constante, ou de deux tubes latéraux (9) reliés entre eux par un tube intermédiaire (10), chacun desdits tubes présentant une épaisseur de paroi (7) constante,
• replier ledit conduit, soit dans ledit tube unique soit dans ledit tube intermédiaire, de manière à lui conférer une forme générale de U retourné définissant une partie médiane (4), deux branches (5) parallèles et deux parties coudées (6) respectives de liaison desdites branches à ladite partie médiane, la section radiale externe dudit conduit restant sensiblement circulaire,
• emboutir lesdites branches entre une matrice et un poinçon de manière à conférer auxdites branches, sur au moins une partie de leur longueur, une section radiale externe oblongue.

11. Procédé de réalisation d'une armature (3) selon la revendication 10, comprenant en outre l'étape de réaliser un emboutissage préliminaire dans une matrice et un poinçon conformés de sorte que l'extrémité inférieure (11) des branches (5) soit profilée en ogive de manière à présenter une section radiale externe s'amenuisant vers le bas.

12. Procédé de réalisation d'une armature (3) selon l'une des revendications 10 ou 11, comprenant en outre, avant ou après emboutissage des branches (5), l'étape de réaliser au moins un cran (12) sur au moins une desdites branches.

## Patentansprüche

1. Kopfstütze (1) für Kraftfahrzeugsitz, wobei die Kopfstütze ein Stützkissen (2) für den Kopf des Insassen und eine verbindende Armierung (3) des Kissens mit einer Rückenlehne des Sitzes umfasst, wobei die Armierung auf der Basis eines Metallrohrs ist, das derart gebogen ist, dass es eine allgemeine umgekehrte U-Form aufweist, die definiert:
- einen mittleren Abschnitt (4), der in dem Kissen untergebracht ist,
- zwei parallele Schenkel (5), die zur gleitenden Aufnahme in der Rückenlehne des Sitzes bestimmt sind, wobei die Schenkel über mindestens einen Teil ihrer Länge einen länglichen äußeren radialen Querschnitt aufweisen, dessen große Abmessung sich längs erstreckt, so dass ihre Biegesteifigkeit bei einer längs wirkenden Kraft verstärkt wird,
- zwei jeweilige gekrümmte Verbindungsabschnitte (6) der Schenkel mit dem mittleren Abschnitt,
wobei die gekrümmten Abschnitte und die Schenkel eine etwa konstante Wanddicke (7) aufweisen, wobei die Kopfstütze **dadurch gekennzeichnet ist, dass** der mittlere Abschnitt und die gekrümmten Abschnitte einen etwa kreisförmigen äußeren radialen Querschnitt aufweisen.

2. Kopfstütze nach Anspruch 1, **dadurch gekennzeichnet, dass** die Armierung (3) auf der Basis eines einzigen Rohrs (8) ist, das derart gebogen ist, dass der mittlere (4) und die gekrümmten (6) Abschnitte und die Schenkel (5) definiert werden.

3. Kopfstütze nach Anspruch 1, **dadurch gekennzeichnet, dass** die Armierung (3) auf der Basis von zwei seitlichen Rohren (9) ist, die die Schenkel (5) definieren, wobei die Schenkel untereinander durch ein Verbindungsrohr (10) verbunden sind, das derart gebogen ist, dass der mittlere (4) und die gekrümmten (6) Abschnitte definiert werden.

4. Kopfstütze nach einem der Ansprüche 1 bis 3, **dadurch gekennzeichnet, dass** die Schenkel (5) einen länglichen äußeren radialen Querschnitt aufweisen, der sich bis zu ihrem unteren Ende (11) erstreckt.

5. Kopfstütze nach einem der Ansprüche 1 bis 4, **dadurch gekennzeichnet, dass** das untere Ende (11) der Schenkel (5) ein Spitzbogenprofil aufweist, so dass es einen äußeren radialen Querschnitt aufweist, der sich nach unten verjüngt.

6. Kopfstütze nach einem der Ansprüche 1 bis 5, **dadurch gekennzeichnet, dass** mindestens ein Schenkel (5) mit mindestens einer Raste (12) ausgestattet ist, die zur Aufnahme eines Feststellteils bestimmt ist, das auf der Rückenlehne des Sitzes beweglich angebracht ist.

7. Kopfstütze nach einem der Ansprüche 1 bis 6, **dadurch gekennzeichnet, dass** die Schenkel (5) in der Seitenansicht eine Krümmung aufweisen, die sich in einen Kreis mit einem Radius von mindestens 800 mm einschreibt.

8. Kopfstütze nach einem der Ansprüche 1 bis 7, **dadurch gekennzeichnet, dass** die Armierung (3) in der Seitenansicht eine allgemeine umgekehrte J-Form aufweist, wobei die gekrümmten Abschnitte (6) etwa eine halbe Umdrehung nach vorn gebogen sind.

9. Armierung (3) für eine Kopfstütze (1) nach einem der Ansprüche 1 bis 8, wobei die Armierung auf der Basis eines Metallrohrs ist, das derart gebogen ist, dass es eine allgemeine umgekehrte U-Form aufweist, definierend:
- einen mittleren Abschnitt (4),
- zwei parallele Schenkel (5), die über mindestens einen Teil ihrer Länge einen länglichen äußeren radialen Querschnitt aufweisen, dessen große Abmessung sich längs erstreckt, so dass ihre Biegesteifigkeit bei einer längs wirkenden Kraft verstärkt wird,
- zwei jeweilige gekrümmte Verbindungsabschnitte (6) der Schenkel mit dem mittleren Abschnitt,
wobei die gekrümmten Abschnitte und die Schenkel eine etwa konstante Wanddicke (7) aufweisen, wobei die Armierung **dadurch gekennzeichnet ist, dass** der mittlere Abschnitt und die gekrümmten Abschnitte einen etwa kreisförmigen äußeren radialen Querschnitt aufweisen.

10. Verfahren zur Herstellung einer Armierung (3), wobei das Verfahren die folgenden Schritte umfasst:
- Bereitstellen einer geraden rohrförmigen Röhre, die einen kreisförmigen äußeren radialen Querschnitt aufweist, wobei die Röhre auf der Basis eines einzigen gebogenen Rohrs (8) mit konstanter Wanddicke (7) oder von zwei seitlichen Rohren (9) ist, die untereinander durch ein Verbindungsrohr (10) verbunden sind, wobei jedes der Rohre eine konstante Wanddicke (7) aufweist,
- Biegen der Röhre, entweder in dem einzigen Rohr oder in dem Verbindungsrohr derart, dass ihr eine allgemeine umgekehrte U-Form verliehen wird, die einen mittleren Abschnitt (4), zwei parallele Schenkel (5) und zwei jeweilige gekrümmten Verbindungsabschnitte (6) der Schenkel mit dem mittleren Abschnitt definieren, wobei der äußere radiale Querschnitt der Röhre etwa kreisförmig bleibt,
- Tiefziehen der Schenkel zwischen einer Matrize und einem Stempel derart, dass den Schenkeln über mindestens einen Teil ihrer Länge ein länglicher äußerer radialer Querschnitt verliehen wird.

11. Verfahren zur Herstellung einer Armierung (3) nach Anspruch 10, umfassend ferner einen Schritt der Durchführung eines vorbereitenden Tiefziehens in einer Matrize und einem Stempel, die derart ausgebildet sind, dass das untere Ende (11) der Schenkel (5) ein Spitzbogenprofil aufweist, so dass es einen äußeren radialen Querschnitt aufweist, der sich nach unten verjüngt.

12. Verfahren zur Herstellung einer Armierung (3) nach einem der Ansprüche 10 oder 11, umfassend ferner vor oder nach dem Tiefziehen der Schenkel (5) den Schritt des Herstellens von mindestens einer Raste (12) auf mindestens einem der Schenkel.

## Claims

1. Headrest (1) for a motor vehicle seat, said headrest comprising a cushion (2) for supporting the passenger's head and a frame (3) for connecting said cushion to the back of said seat, said frame being based on a metal tube folded so as to have a general overturned U-shape defining:
- a middle portion (4) housed in said cushion,
- two parallel branches (5) intended to be slidably received in the back of said seat, said branches having, over at least a portion of their length, an oblong external radial section whose large dimension extends longitudinally, so as to reinforce their flexural strength against a force applied longitudinally,
- two respective bent portions (6) for connecting said branches to said middle portion,
said bent portions and said branches having a substantially constant wall (7) thickness, said headrest being **characterised in that** said middle portion and said bent portions have a substantially circular external radial section.

2. Headrest according to claim 1, **characterised in that** the frame (3) is based on a single tube (8) folded so as to define the middle (4) and bent (6) portions and the branches (5).

3. Headrest according to claim 1, **characterised in that** the frame (3) is based on two lateral tubes (9) defining the branches (5), said branches being connected together by an intermediate tube (10) folded so as to define the middle (4) and bent (6) portions.

4. Headrest according to any one of claims 1 to 3, **characterised in that** the branches (5) have an oblong external radial section extending to their lower end (11).

5. Headrest according to any one of claims 1 to 4, **characterised in that** the lower end (11) of the branches (5) is ogive-like profiled so as to have an external radial section tapering downwards.

6. Headrest according to any one of claims 1 to 5, **characterised in that** at least one branch (5) is provided with at least one notch (12) intended to receive a blocking part movably mounted on the back of the seat.

7. Headrest according to any one of claims 1 to 6, **characterised in that** the branches (5) have in a side view a curvature forming a portion of a circle with a minimum radius of 800 mm.

8. Headrest according to any one of claims 1 to 7, **characterised in that** the frame (3) has in a side view a general reversed J-shape, the bent portions (6) being folded substantially by half a turn forward.

9. Frame (3) for a headrest (1) according to any one of claims 1 to 8, said frame being based on a metal tube folded so as to have a general overturned U-shape defining:
- a middle portion (4),
- two parallel branches (5) having, over at least a portion of their length, an oblong external radial section whose large dimension extends longitudinally, so as to reinforce their flexural strength against a force applied longitudinally,
- two respective bent portions (6) for connecting said branches to said middle portion,
said bent portions and said branches having a substantially constant wall (7) thickness, said frame being **characterised in that** said middle portion and said bent portions have a substantially circular external radial section.

10. Method for producing a frame (3), said method comprising the following steps:
- providing a rectilinear tubular conduit having a circular external radial section, said conduit being based on a single folded tube (8), of a constant wall (7) thickness, or two lateral tubes (9) connected together by an intermediate tube (10), each of said tubes having a constant wall (7) thickness,
- folding said conduit, either in said single tube or in said intermediate tube, so as to give it a general overturned U-shape defining a middle portion (4), two parallel branches (5) and two respective bent portions (6) for connecting said branches to said middle portion, the external radial section of said conduit remaining substantially circular,
- stamping said branches between a die and a punch so as to give said branches, over at least a portion of their length, an oblong external radial section.

11. Method for producing a frame (3) according to claim 10, further comprising the step of performing a preliminary stamping in a die and a punch shaped so that the lower end (11) of the branches (5) is ogive-like profiled so as to have an external radial section tapering downwards.

12. Method for producing a frame (3) according to one of claims 10 or 11, further comprising, before or after stamping the branches (5), the step of making at least one notch (12) on at least one of said branches.
